Europäisches Patentamt

(19) European Patent Office

Office européen des brevets

(11) Numéro de publication : **0 032 338**
**B2**

(12) **NOUVEAU FASCICULE DE BREVET EUROPÉEN**

(45) Date de publication du nouveau fascicule du brevet :
23.03.88

(51) Int. Cl.⁴ : **C 01 B 15/023**

(21) Numéro de dépôt : **80401834.9**

(22) Date de dépôt : **19.12.80**

(54) Procédé cyclique de production de peroxyde d'hydrogène.

(30) Priorité : **14.01.80 FR 8000707**

(43) Date de publication de la demande :
**22.07.81 Bulletin 81/29**

(45) Mention de la délivrance du brevet :
**11.08.82 Bulletin 82/32**

(45) Mention de la décision concernant l'opposition :
**23.03.88 Bulletin 88/12**

(84) Etats contractants désignés :
**BE DE FR GB IT SE**

(56) Documents cités :
**BE-A- 606 893**
**BE-A- 774 368**
**FR-A- 1 405 861**
**FR-A- 1 473 779**
**FR-A- 2 061 269**
**FR-A- 2 111 784**
**FR-A- 2 460 958**
**FR-A- 2 460 960**
**GB-A- 927 617**
**US-A- 2 537 516**
**US-A- 2 935 381**
**US-A- 3 122 417**
**US-A- 3 215 497**
**US-A- 3 383 174**
**US-A- 3 483 133**
**US-A- 3 499 842**
**US-A- 3 681 022**
**US-A- 3 778 377**
**US-A- 3 860 391**
**Technical Bulletin no. 1C/SCS-323, Monsanto, Sept. 1978**
**Technical Bulletin no. 1C/SCS-320, Monsanto, Sept. 1977**
**Technical Bulletin, no. 1C/SCS-322, Monsanto, Juin 1977**

(73) Titulaire : **OXYSYNTHESE**
**6, rue Cognacq-Jay**
**F-75007 Paris (FR)**

(72) Inventeur : **Thirion, Pierre**
**15, Hameau du Manoir Noyarey**
**F-38360 Sassenage (FR)**

(74) Mandataire : **Bouton Neuvy, Liliane et al**
**L'Air liquide, Société Anonyme pour L'Etude et**
**L'Exploitation des Procédés Georges Claude 75,**
**Quai d'Orsay**
**F-75321 Paris Cédex 07 (FR)**

Jouve, 18, rue St-Denis, 75001 Paris, France

## Description

La présente invention concerne un procédé cyclique de production de peroxyde d'hydrogène.

Ce procédé cyclique consiste à hydrogéner une solution organique contenant une quinone, en hydroquinone ; puis à oxyder par l'oxygène, ou par l'air, cette hydroquinone en hydroperoxyde de quinone ; puis, enfin, à décomposer cette hydroperoxyde par l'eau, en une solution organique contenant la quinone régénérée. Cette dernière solution est alors réintroduite dans un nouveau cycle : hydrogénation, oxydation extraction.

En pratique, la solution organique de quinones, appelée solution navette ou solution de travail, circule dans une série de trois appareils : un hydrogénateur, un oxydeur et une colonne d'extraction liquide-liquide. Le matériau constitutif de ces appareils est en général l'aluminium.

Comme dans la plupart des synthèses effectuées en milieu organique, à côté de la réaction principale, se développent des réactions secondaires. Ici donc, les réactions secondaires se présentent dans chacune des trois phases du procédé et le rendement global de ce dernier est le produit des rendements partiels de chaque opération.

Dans les deux dernières phases, oxydation et extraction, la présence des peroxydes et d'oxygène fait que ces réactions secondaires sont essentiellement des réactions d'oxydation des éléments constitutifs de la solution de travail et de décomposition des peroxydes. D'autre part, on remarque que la décomposition des peroxydes provoque une corrosion plus intense du métal constituant les parois des réacteurs et en particulier de l'aluminium.

Cette corrosion peut également induire d'autres réactions secondaires. Aussi a-t-on, dès l'origine du procédé, ajouté dans l'eau d'extraction des inhibiteurs de la décomposition du peroxyde d'hydrogène et de la corrosion de l'aluminium. Sont très couramment employés, le pyrophosphate de sodium comme stabilisant de la décomposition de $H_{O2}$ et le nitrate d'ammonium comme passivant de l'aluminium.

Quant à l'oxydeur, l'absence apparente d'une phase aqueuse et la dessiccation due au flux d'air chaud (40 à 60 °C) qui le parcourt, pourraient faire croire qu'il est à l'abri de la corrosion et de la décomposition. La pratique du procédé montre que ce n'est pas le cas ; la présence de sels minéraux et organiques, de sodium principalement, fait que sur sa paroi se dépose une solution saline concentrée cause d'une corrosion du métal liée à une décomposition des peroxydes.

On sait, notamment par le brevet français 1.405.861, que l'adjonction de stabilisant du peroxyde d'hydrogène et de passivant dans l'oxydeur présente un intérêt. Selon cet enseignement on procède à une introduction continue à très faible débit d'une solution aqueuse contenant du pyrophosphate de sodium et du nitrate d'ammonium dans la solution organique entrant dans l'oxydeur, mais aussi sortant de l'oxydeur, afin de protéger les installations annexes placées entre l'oxydeur et l'extracteur.

L'utilisation de pyrophosphate, à la fois sur l'oxydeur et l'extracteur, a donc représenté un perfectionnement très important dont l'aspect le plus remarquable a été la suppression du gel d'alumine contenu dans la solution aqueuse d'$H_2O_2$ ; gel entraînant le colmatage rapide de la barrière de filtration placée en aval de l'extraction sur cette solution. Avec le pyrophosphate, le gel d'alumine est remplacé sur les filtres par un dépôt granuleux de phosphate d'aluminium, beaucoup moins abondant, puisque la corrosion est fortement diminuée.

Cependant, l'ion pyrophosphate, $P_2O_7^{4-}$, présente deux inconvénients majeurs :

1. Il s'hydrolyse en ion orthophosphate, $PO_4^{3-}$, beaucoup moins actif que l'ion pyrophosphate, hydrolyse d'autant plus rapide que le milieu est acide.

2. Le complexe qu'il forme avec l'ion Al est très peu soluble aux environs de pH2, et, d'autant moins que la concentration en $H_2O_2$ de la solution augmente.

Ces inconvénients ne sont pas très apparents quand on exploite le procédé avec une productivité relativement faible, c'est-à-dire quand la concentration en « équivalent $H_2O_2$ » de la solution organique est de 5 à 9 g/litre.

En effet, $H_2O_2$ est intrinsèquement acide et ses solutions aqueuses ont un pH d'autant plus bas que la concentration est plus élevée ; comme il existe un équilibre de concentration $H_2O_2$ entre les solutions organiques oxydées et les solutions aqueuses contenues dans l'oxydeur et l'extracteur, une augmentation de l'équivalent $H_2O_2$ de la phase organique entraîne une diminution de pH de la phase aqueuse. Par exemple, un équivalent $H_2O_2$ de 10 à 12 g/litre en solution organique est en équilibre de concentration avec une solution aqueuse à 650-700 g/l dont le pH ne peut être alors qu'intérieur à 3 ; ceci entraîne une hydrolyse accélérée de l'ion pyrophosphate ; et comme ce dernier doit être maintenu en excès (par ajouts éventuels), le pyrophosphate d'aluminium peut précipiter par l'effet conjugué de la concentration $H_2O_2$ et du pH. Pratiquement, cette insolubilité du complexe pyrophosphate-aluminium apporte les inconvénients suivants.

Dans la colonne d'extraction, et en particulier en pied, là où le peroxyde d'hydrogène est le plus concentré et le pH minimum, on constate la formation de dépôts adhérents de pyrophosphate d'aluminium. Ces dépôts sont notamment présents sur les parois et les regards en verre où ils gènent la visibilité. Lesdits dépôts adhérents apparaissent sur les plateaux perforés de la colonne — d'abord sur le premier — et, en particulier sur le pourtour des perforations. La présence de ces dépôts réduit le débit de

2

la solution de travail, en entraînant tôt ou tard l'arrêt de l'installation pour le nettoyage des plateaux et des regards de la colonne d'extraction.

En aval de l'extracteur, on remarque l'existence de dépôts adhérents du complexe pyrophosphate-aluminium sur les vaporisateurs de concentration du peroxyde d'hydrogène par distillation ; et il apparaît des floculats dans les bacs de stockage des solutions concentrées de peroxyde d'hydrogène.

De même, en amont de la phase d'extraction, on constate l'apparition de dépôts adhérents sur les parois de l'oxydeur, des échangeurs et réfrigérants placés entre l'oxydeur et l'extracteur. Ces dépôts sont particulièrement préjudiciables sur l'aluminium, car, formés en présence d'une phase aqueuse $H_2O_2$ concentrée et acide, ils sont le siège d'une corrosion sous les dépôts, avec formation de criques parfois profondes et graves.

Et d'autre part, le brevet belge 774.368 décrit la stabilisation de solutions de peroxyde d'hydrogène relativement concentrées par l'acide éthylènediaminotétraméthylène-phosphonique en quantité d'au moins 0,01 % en poids par rapport au poids de peroxyde d'hydrogène en solution. L'addition de ce stabilisant dans les solutions aqueuses de peroxyde d'hydrogène permet d'inhiber la décomposition de $H_2O_2$ en présence d'impuretés tout en assurant aussi une moindre corrosion des métaux, comparativement aux solutions aqueuses de $H_2O_2$ stabilisées par les stabilisants classiques.

Selon la présente invention, il a été découvert un moyen qui pallie les divers inconvénients du pyrophosphate de sodium. Le perfectionnement au procédé cyclique de production de peroxyde d'hydrogène, dans des appareils en aluminium, comportant une réduction d'un composé quinonique, suivie d'une oxydation en hydroperoxyde, puis enfin, d'une extraction à l'eau fournissant une solution aqueuse de peroxyde d'hydrogène, est constitué par l'introduction dans la solution de travail lors des phases d'oxydation et d'extraction d'une solution aqueuse contenant un acide organophosphonique sous forme libre de sel de sodium, potassium ou ammonium, seul ou en mélange : l'acide nitrilotriméthylènephosphonique ou l'acide diéthylènetriaminopentaméthylène phosphonique ; la solution aqueuse introduite au cours de la phase d'oxydation contenant une quantité dudit acide organophosphonique comprise entre 0,2 et 10 g/l et la solution aqueuse introduite au cours de la phase d'extraction contient entre 100 et 500 mg/l dudit acide organophosphonique.

En particulier on peut utiliser des solutions aqueuses d'acide diéthylène triaminopentaméthylène phosphonique.

L'addition d'un acide organophosphonique au cours des phases d'oxydation et d'extraction, apporte une solution extrêmement intéressante, notamment aux problèmes de corrosion.

Car il a été constaté que les complexes des acides organophosphoniques avec l'aluminium en milieu solution de travail sont nettement plus solubles aux environs de pH 1 à 3 que le pyrophosphate d'aluminium. De plus, les acides organophosphoniques se sont révélés être d'excellents stabilisants résistant à l'hydrolyse et à l'oxydation dans les conditions du procédé cyclique. Enfin, ce qui est très important, lesdits acides organophosphoniques présentent un coefficient de partage entre l'eau et les solvants de la solution de travail si favorables à l'eau, qu'il n'est pratiquement pas mesurable et peut être considéré comme infini.

Il a été trouvé avantageux d'introduire dans la phase d'oxydation une solution aqueuse contenant une quantité d'acide organo-phosphonique qui peut être préférentiellement comprise entre 0,5 et 2 g/litre.

La quantité d'acide organophosphonique présente dans la solution aqueuse ajoutée dans la phase d'extraction peut être de préférence comprise entre 150 et 250 mg/litre.

Selon une variante de l'invention, la solution aqueuse de traitement des phases d'oxydation et d'extraction peut contenir un acide organophosphonique associé à l'acide nitrique ou à un nitrate alcalin ou d'ammonium.

Il a été considéré comme intéressant que la quantité d'acide nitrique ou de nitrate ajoutée à la solution aqueuse d'acide organo-phosphonique au cours de la phase d'oxydation soit comprise entre 2 et 50 g/litre, de préférence à 5 et 20 g/litre.

La quantité d'acide nitrique ou de nitrate ajoutée à la solution aqueuse d'acide organophosphonique au cours de la phase d'extraction peut être comprise entre 100 et 500 mg/litre et de préférence entre 150 et 250 mg/litre.

Il est donné ci-après des exemples qui illustrent l'invention à titre non limitatif, en mettant en évidence les avantages apportés par l'introduction de l'acide diéthylènetriaminopentaméthylène phosphonique ou de l'acide nitrilotriméthylène phosphonique dans les phases d'oxydation et d'extraction.

### Exemple 1

Etude comparative de la solubilité des sels d'aluminium dans le peroxyde d'hydrogène

On effectue les tests de solubilité selon le mode opératoire suivant : dans une solution aqueuse d'$H_2O_2$ pure contenant 16 mg/l d'ion $Al^{+++}$, on ajoute une certaine quantité d'acide phosphonique ; la solution ainsi obtenue est maintenue à 50 °C et agitée pendant 3 heures. La solution chaude est filtrée sur filtre désignée par la marque commerciale « Millipore » de 1 micromètre ; l'aluminium est dosé sur le filtrat par spectrométrie d'émission.

Les résultats obtenus avec l'acide pyrophosphorique, l'acide orthophosphorique et l'acide diéthylène-triamino-pentaméthylènephosphonique (D.T.P.P.), sont rassemblés dans le tableau I.

Tableau I

| Acide | pH | $H_2O_2$ à 32 % en poids | | $H_2O_2$ à 48 % en poids | |
|---|---|---|---|---|---|
| Pyrophosphorique | | | | | |
| 58,6 mg/l | 4 | 16 | mgAl/l | 16 | mg Al/l |
| " | 2 | 3,6 | " | 2 | " |
| Orthophosphorique | | | | | |
| 64,5 mg/l | 4 | 16 | " | 16 | " |
| " | 2 | 16 | " | 16 | " |
| D.T.P.P. | | | | | |
| 200 mg/l | 4 | 16 | " | 16 | " |
| " | 2 | 16 | " | 12,5 | " |

Dans les cas où la solubilité trouvée correspond à 16 mg Al/l, il faut comprendre que la solubilité réelle du sel d'Al est au moins égale à 16 mg Al/litre.

Ce tableau montre d'autre part que dans la solution d'$H_2O_2$ à 48 % et à pH 2, la solubilité du complexe D.T.P.P.-Al est plus de six fois supérieure à celle du pyrophosphate d'Al.

Exemple 2

Coefficient de partage de l'acide diéthylène triaminopentaméthylènephosphonique (D.T.P.P.)

On mesure le coefficient de partage du D.T.P.P. entre la phase aqueuse organique lors de l'opération d'extraction. On met en équilibre à 25 °C un volume d'eau contenant 125 mg/l de D.T.P.P. avec 1,10 et 50 volumes de phase organique ; celle-ci étant constituée par un mélange à 50 % en poids d'acétate d'orthométhylcyclohexyle et d'une coupe d'hydrocarbure aromatique en $C_9$ (intervalle d'ébullition 165-180 °C). Après décantation, on dose le D.T.P.P. dans la phase aqueuse par polarographie selon la méthode connue sous la dénomination méthode Métrom n° A76F.

Quel que soit le rapport de volumes des deux phases, on constate que la concentration du D.T.P.P. reste pratiquement constante dans la phase aqueuse. Le coefficient de partage du D.T.P.P. est, par conséquent, pratiquement infini en faveur de l'eau.

Exemple 3

Vitesse de démixtion et formation de mousse

On a vérifié que l'addition d'acide organophosphonique dans l'eau d'extraction, n'avait pas d'effet secondaire préjudiciable aux différentes phases d'élaboration de la solution concentrée d'$H_2O_2$. Pour des doses de l'ordre de 100 à 200 mg/l, on n'a noté aucune incidence des acides organophosphoniques sur la vitesse de démixtion des phases organiques et aqueuses après la colonne d'extraction liquide-liquide.

D'autre part, aucune formation de mousse n'a été observée, lors de la distillation sous vide à 80 °C d'une solution d'$H_2O_2$ à 70 %, dans un appareil de distillation à reflux en Pyrex.

Sur la base de ces données et vérifications préliminaires encourageantes, on procède à une expérimentation, à l'échelle pilote, sur un appareil de fabrication d'$H_2O_2$ simulant le cycle de production industrielle. L'appareil pilote en aluminium de qualité « A 5 » est équipé d'une colonne d'extraction en verre munie de plateaux perforés en aluminium « A 5 ». On exécute un programme d'essais durant une période de 3 mois pendant laquelle l'appareil fonctionne en continu.

Les essais portent sur des séquences de fonctionnement comparées avec une eau d'extraction comportant des additifs différents :
— Pyrophosphate disodique + $NO_3H$ (exemple comparatif)
— D.T.P.P. + $NO_3H$ (selon l'invention)
— N T P + $NO_3H$ (selon l'invention)
— H E D P + $NO_3H$ (exemple comparatif)
— E D T P + $NO_3H$ (exemple comparatif)
— N T P : Acide nitrilo-triméthylène-phosphonique
— H E D P : Acide hydroxy 1-éthane-diphosphonique 1-1
— E D T P : Acide éthylène-diamino-tétraméthylène-phosphonique.

On maintient constantes les conditions de marche du pilote de manière à pouvoir rendre comparable les résultats avec les différents additifs ; d'autre part, on ajuste le pH de l'eau d'extraction à pH 2,5 dans tous les cas ; l'hydrogénation est également constante et égale à 10 g/l d'$H_2O_2$ potentielle. On suit la corrosion de l'aluminium A 5 indirectement par le dosage de l'aluminium.

Les résultats de ces essais sont rassemblés dans le tableau II, les chiffres indiqués représentent la moyenne de résultats issus de contrôles journaliers.

4

Tableau II

| Conditions de marche du pilote | Durée | $H_2O_2$ pH | $H_2O_2$ Acidité méq./l | $H_2O_2$ $Al^{+++}$ mg/l | Oxydation $R^t$ % |
|---|---|---|---|---|---|
| 1. Eau d'extraction<br>- $NO_3H$ : 244 mg/l<br>- $P_2O_7H_2Na_2$ : 30 mg/l<br>- pH : 2,5 | 35 jours | 1,7 | 5,5 | 20 | 89,5 |
| 2. Eau d'extraction<br>- $NO_3H$ : 197 mg/l<br>- D T P P : 20 mg/l<br>- pH : 2,5 | 16 jours | 1,7 | 6,0 | 1,2 | 89,5 |
| 2 bis. Eau de l'Oxydeur<br>2 x 100 ml/24 h<br>- $NO_3H$ : 9,6 g/l<br>- D T P P : 1 g/l | 9 jours | 1,8 | 4 | 1 | 94,5 |
| 3. Eau d'extraction<br>- $NO_3H$ : 197 mg/l<br>- N T P : 20 mg/l<br>- pH : 2,5 | 10 jours | 1,6 | 7,6 | 2,2 | 91,4 |
| 4. Eau d'extraction<br>- $NO_3H$ : 197 mg/l<br>- H E-D P : 20 mg/l<br>- pH : 2,5 | 10 jours | 1,6 | 7,0 | 5,5 | 89,7 |
| 5. Eau d'extraction<br>- $NO_2H$ : 197 mg/l<br>- E D T P : 20 mg/l<br>- pH : 2,5 | 10 jours | 1,7 | 5 | 1,75 | 88,6 |

Les résultats du tableau II font apparaître que les acides organophosphoniques diminuent la corrosion dans une forte proportion par rapport au pyrophosphate disodique ; d'autre part, parmi les 4 acides organophosphoniques testés, les meilleurs résultats ont été obtenus avec le D.T.P.P.

Au cours du déroulement de l'essai 2 avec le D.T.P.P., on introduit dans l'oxydeur (Tableau II, essai 2 bis), une solution stabilisante et passivante contenant 1 g/l de D.T.P.P. et 9,6 g/l de $NO_3H$. Deux additions de 100 ml de cette solution ont été réalisées à 24 heures d'intervalle au début de l'essai qui a duré 9 jours.

Les différents contrôles effectués durant cet essai 2 bis, montrent que la solution aqueuse d'$H_2O_2$ a une teneur en aluminium dissous équivalente à celle de l'essai 2 mais on observe par contre un rendement moyen d'oxydation sensiblement amélioré, 94,5 % contre 89,5 %.

Le rendement d'oxydation est défini comme le rapport de l'$H_2O_2$ potentielle contenue dans la solution de travail à la sortie de l'oxydeur sur l'$H_2O_2$ potentielle contenue dans la solution de travail à l'entrée de l'oxydeur ; ce rapport est exprimé en pourcentage.

# 0 032 338

## Revendications

1. Procédé cyclique de production de peroxyde d'hydrogène comportant une réduction d'un composé quinonique, suivie d'une oxydation en hydroperoxyde, puis enfin d'une extraction à l'eau fournissant une solution aqueuse de peroxyde d'hydrogène, ledit procédé étant mis en œuvre dans des appareils en aluminium, caractérisé en ce qu'on introduit dans la solution de travail lors des phases d'oxydation et d'extraction une solution aqueuse contenant un acide organophosphonique sous forme libre, de sel de sodium, potassium ou ammonium, seul ou en mélange : l'acide nitrilotriméthylènephosphonique ou l'acide diéthylènetriaminopentaméthylène phosphonique ; la solution aqueuse introduite au cours de la phase d'oxydation contenant une quantité du dit acide organophosphonique comprise entre 0,2 et 10 g/l et la solution aqueuse introduite au cours de la phase d'extraction contient entre 100 et 500 mg/l du dit acide organophosphonique.

2. Procédé cyclique de production de peroxyde d'hydrogène selon la revendication 1, selon lequel la solution aqueuse introduite au cours de la phase d'oxydation contient entre 0,5 et 2 g/l du dit acide organophosphonique et celle introduite au cours de la phase d'extraction contient entre 150 et 250 mg/l du dit acide organophosphonique.

3. Procédé cyclique de production de peroxyde d'hydrogène comportant une réduction d'un composé quinonique suivie d'une oxydation en hydroperoxyde, puis enfin d'une extraction à l'eau, fournissant une solution aqueuse de peroxyde d'hydrogène selon la revendication 1, caractérisé en ce qu'on introduit dans la solution de travail lors des phases d'oxydation et d'extraction une solution aqueuse contenant un acide organophosphonique : l'acide nitrilotriméthylènephosphonique ou l'acide diéthylènetriaminopentaméthylènephosphonique associé à l'acide nitrique ou un nitrate alcalin ou d'ammonium ; la solution aqueuse introduite au cours de la phase d'oxydation contenant une quantité du dit acide organophosphonique comprise entre 0,2 et 10 g/l et entre 2 à 50 g/l d'acide nitrique ou d'un nitrate alcalin ou d'ammonium, et la solution aqueuse introduite au cours de la phase d'extraction contient entre 100 et 500 mg/l du dit acide organophosphonique et entre 100 et 500 mg/l de nitrate d'ammonium.

4. Procédé cyclique de production de peroxyde d'hydrogène selon la revendication 3, selon lequel la solution aqueuse introduite au cours de la phase d'oxydation contient entre 0,5 et 2 g/l du dit acide organophosphonique et 5 à 20 g/l d'acide nitrique ou d'un nitrate alcalin ou d'ammonium, et celle introduite au cours de la phase d'extraction contient entre 150 et 250 mg/l du dit acide organophosphonique et 150 à 250 mg/l d'acide nitrique ou d'un nitrate alcalin ou d'ammonium.

## Claims

1. Cyclic process for the production of hydrogen peroxide comprising a reduction of a quinone compound followed by an oxidation to hydroperoxide and then finally an extraction by water delivering an aqueous solution of hydrogen peroxide, said process being carried out in aluminum apparatus, characterized in that during the phases of oxidation and extraction into the working solution an aqueous solution is introduced which contains an organophosphonic acid in free form or in the form of a sodium, potassium or ammonium salt solely or in admixture : nitrilotrimethylene phosphonic acid or diethylenetriaminopentamethylene phosphonic acid, the aqueous solution introduced during the oxidation phase containing a quantity of said organophosphonic acid between 0,2 and 10 g/l and the aqueous solution introduced during the extraction phase containing between 100 and 500 mg/l of said organophosphonic acid.

2. Cyclic process for the production of hydrogen peroxide according to claim 1, according to which the aqueous solution introduced during the oxidation phase contains between 0,5 and 2 g/l of said organophosphonic acid and that introduced during the extraction phase contains between 150 and 250 mg/l of said organophosphonic acid.

3. Cyclic process for the production of hydrogen peroxide comprising a reduction of a quinone compound followed by an oxidation to hydroperoxide and then finally an extraction by water delivering an aqueous solution of hydrogen peroxide according to claim 1, characterized in that during the phases of oxidation and extraction into the working solution an aqueous solution is introduced which contains in organophosphonic acid : nitrilotrimethylene phosphonic acid or diethylenetriaminopentamethylene phosphonic acid, combined with nitric acid or an alkali or ammonium nitrate, the aqueous solution introduced during the oxidation phase containing a quantity of said organophosphonic acid between 0,2 and 10 g/l and between 2 and 50 g/l of nitric acid or an alkali or ammonium nitrate and the aqueous solution introduced during the extraction phase containing between 100 and 500 mg/l of said organophosphonic acid and between 100 and 500 mg/l of ammonium nitrate.

4. Cyclic process for the production of hydrogen peroxide according to claim 3, according to which the aqueous solution introduced during the oxidation phase contains between 0,5 and 2 g/l of said organophosphonic acid and 5 to 20 g/l of nitric acid or alkali or ammonium nitrate, and that introduced during the extraction phase contains between 150 and 250 mg/l of said organophosphonic acid and 150 to 250 mg/l of nitric acid or an alkali or ammonium nitrate.

6

**Patentansprüche**

1. Zyklisches Verfahren zur Herstellung von Wasserstoffperoxid mit einer Reduktion einer Chinonverbindung, gefolgt von einer Oxidation zu Hydroperoxid und schließlich dann einer Extraktion mit Wasser, die eine wäßrige Wasserstoffperoxidlösung liefert, wobei das Verfahren in Aluminiumapparaturen durchgeführt wird, dadurch gekennzeichnet, daß man in die Arbeitslösung während der Phasen der Oxidation und Extraktion eine wäßrige Lösung einführt, die eine Organophosphonsäure in freier Form oder in der Form des Natrium-, Kalium- oder Ammoniumsalzes alleine oder im Gemisch enthält : Nitrilotrimethylenphosphonsäure oder Diethylentriaminopentamethylenphosphonsäure, wobei die im Verlauf der Oxidationsphase eingeführte wäßrige Lösung eine Menge dieser Organophosphonsäure zwischen 0,2 und 10 g/l enthält und die im Verlauf der Extraktionsphase eingeführte wäßrige Lösung 100 bis 500 mg/l dieser Organophosphonsäure enthält.

2. Zyklisches Verfahren zur Herstellung von Wasserstoffperoxid nach Anspruch 1, gemäß dem die im Verlauf der Oxidationsphase eingeführte wäßrige Lösung zwischen 0,5 und 2 g/l der Organophosphonsäure enthält und die im Verlauf der Extraktionsphase eingeführte zwischen 150 und 250 mg/l der Organophosphonsäure enthält.

3. Zyklisches Verfahren zur Herstellung von Wasserstoffperoxid mit einer Reduktion einer Chinonverbindung, gefolgt von einer Oxidation zu Hydroperoxid und schließlich dann einer Extraktion mit Wasser, die eine wäßrige Wasserstoffperoxidlösung liefert, nach Anspruch 1, dadurch gekennzeichnet, daß man in die Arbeitslösung während der Phasen der Oxidation und Extraktion eine wäßrige Lösung einführt, die eine Organophosphonsäure : Nitrilotrimethylenphosphonsäure oder Diethylentriaminopentamethylenphosphonsäure, verbunden mit Salpetersäure oder einem Alkali- oder Ammoniumnitrat enthält, wobei die im Verlauf der Oxidationsphase eingeführte wäßrige Lösung eine Menge der Organophosphonsäure zwischen 0,2 und 10 g/l und 2 bis 50 g/l Salpetersäure oder Alkali- oder Ammoniumnitrat enthält und die im Verlauf der Extraktionsphase eingeführte wäßrige Lösung 100 bis 500 mg/l der Organophosphonsäure und 100 bis 500 mg/l Ammoniumnitrat enthält.

4. Zyklisches Verfahren zur Herstellung von Wasserstoffperoxid nach Anspruch 3, gemäß dem die im Verlauf der Oxidationsphase eingeführte wäßrige Lösung 0,5 bis 2 g/l der Organophosphonsäure und 5 bis 20 g/l der Salpetersäure oder eines Alkali- oder Ammoniumnitrates enthält und die im Verlauf der Extraktionsphase eingeführte 150 bis 250 mg/l der Organophosphonsäure und 150 bis 250 mg/l Salpetersäure oder eines Alkali- oder Ammoniumnitrates enthält.